# EUROPÄISCHE PATENTSCHRIFT

(11) **EP 1 332 172 B1**
(45) Veröffentlichungstag und Bekanntmachung des Hinweises auf die Patenterteilung: **14.12.2005**
(21) Anmeldenummer: 01982396.2
(22) Anmeldetag: 04.10.2001
(51) Int. Cl.: C08J 9/32, C08J 9/236

(54) **VERFAHREN ZUR HERSTELLUNG VON SYNTAKTISCHEN AMINOPLASTSCHÄUMEN**
PROCESS FOR THE PRODUCTION OF SYNTACTIC AMINOPLAST FOAMS
PROCEDE DE PRODUCTION DE MOUSSES AMINOPLASTES SYNTACTIQUES

(30) Priorität: 10.10.2000 AT 17172000
(43) Veröffentlichungstag der Anmeldung: 06.08.2003
(73) Patentinhaber: AMI Agrolinz Melamine International GmbH, 4020 Linz (AT)
(72) Erfinder: RÄTZSCH, Manfred, A-4062 Wilhering/Thalheim (AT); BUCKA, Hartmut, A-4622 Eggendorf 125 (AT)
(74) Vertreter: Gross, Felix
(86) Internationale Anmeldenummer: PCT/EP2001/011459
(87) Internationale Veröffentlichungsnummer: WO 2002/031032

(56) Entgegenhaltungen:
- EP-A- 0 443 427
- DE-A- 2 310 408
- DE-A- 4 235 748
- GB-A- 743 866
- GB-A- 1 054 171
- US-A- 3 300 421
- US-A- 4 522 878
- US-A- 5 120 769

## Beschreibung

Die Erfindung betrifft ein Verfahren zur Herstellung syntaktischer Aminoplastschäume.

Syntaktische Kunststoffschäume, bei denen die unverschäumte Kunststoffmatrix Hohlräumeenthaltende Füllstoffe enthält, wie Ballotini- oder Perlite-Mikrohohlkugeln gefüllte Polyolefine [Wagenknecht, U., Kunststoffberater 6(1996), 18-22] oder mit gemahlenem offenzelligen Harnstoff-Formaldehyd-Hartschaum und Cellulose gefüllte Aminoplaste (DE 23 22 617 A1) sind bekannt Ebenfalls bekannt ist die Herstellung von offenzelligen Schaumstoffplatten oder Schaumstoffbahnen aus Aminoplasten wie Harnstoffharzen (DE 32 16 897 A1) oder Melaminharzen (EP 0 017 672 B1). Offenzellige Schäume besitzen den Nachteil einer hohen Absorption gegenüber flüssigen Medien. Weiterhin ist bekannt, die Wasserabsorption von offenzelligen Melaminharzschaumplatten durch Beschichtung mit Siliconharzen (EP 0 633 283 B1) oder Polyfluorolefinen (EP 0 856 549 A1) herabzusetzen. Bekannt ist ebenfalls die Herstellung von Aminoplasthohlkugeln durch Eintrag von Aminoplastprepolymeren in Mehrphasensysteme (DE 19518 942 A1).

Die Aufgabe der vorliegenden Erfindung ist ein Verfahren zur Herstellung syntaktischer Aminoplastschäume.

Die Aufgabe wurde durch syntaktische Aminoplastschäume hoher Flammfestigkeit und Hydrolyseresistenz mit einer Dichte von 5 bis 500 kg/m³ aus verklebten kugelförmigen Partikeln gelöst, wobei die kugelförmigen Partikel kugelförmige Mikrohohlpartikel mit einer Membran aus Aminoplasten vom Typ Melaminharze, Hamstoffharze, Cyanamidharze, Dicyandiamidharze, Sulfonamidharze und/oder Anilinharze sind und die Klebstoffschicht zwischen den kugelförmigen Mikrohohlpartikeln aus Aminoplasten und/oder weiteren duroplastischen Polymeren vom Typ Epoxidharze, Phenolharze, Resorcinharze und/oder Polyesterharze besteht, wobei der Anteil der Klebstoffschicht 1 bis 20 Masse%, bezogen auf die Masse der Membran der verklebten kugelförmigen Mikrohohlpartikel; beträgt und wobei die verklebten kugelförmigen Mikrohohlpartikel in der Membran der Hohlpartikel gegebenenfalls 1 bis 20 Masse% Füll- und/oder Verstärkerstoffe, 0,1 bis 3 Masse% Flammschutzmittel, 0,1 bis 1 Masse% Pigmente und/oder 0,05 bis 30 Masse% Hydrophobierungsmittel, jeweils bezogen auf die Masse der Membran der kugelförmigen Mikrohohlpartikel, und in der Klebstoffschicht gegebenenfalls 0,05 bis 1 Masse% Verarbeitungshilfsmittel, bezogen auf die Masse der Klebstoffschicht, enthalten können.

Bevorzugt sind die in den syntaktischen Aminoplastschäumen enthaltenen kugelförmigen Partikel kugelförmige Mikrohohlpartikel mit einem Durchmesser von 10 bis 500 µm, bevorzugt 20 bis 80 µm.

Beispiele für die in den syntaktischen Aminoplastschäumen als Aminoplaste gegebenenfalls enthaltenen Harnstoffharze sind neben Harnstoff-formaldehyd-Harzen ebenfalls Mischkondensate mit Phenolen, Säureamiden oder Sulfonsäureamiden. Beispiele für die in den syntaktischen Aminoplastschäumen als Aminoplaste gegebenenfalls enthaltenen Sulfonamidharze sind Sulfonamidharze aus p-Toluolsulfonamid und Formaldehyd. Beispiele für die in den syntaktischen Aminoplastschäumen als Aminoplaste gegebenenfalls enthaltenen Anilinharze sind Anilinharze, die als aromatische Diamine neben Anilin ebenfalls Toluidin und/oder Xylidine enthalten können.

Die in den syntaktischen Aminoplastschäumen als Aminoplaste gegebenenfalls enthaltenen Melaminharze bestehen bevorzugt aus Melaminharzen aus Polykondensaten von Melamin und C₁-C₁₀-Aldehyden bzw. C₁-C₁₀-Aldehyd-Mischungen und/oder Polykondensaten aus Mischungen von 20 bis 99,9 Masse% Melamin und 0,1 bis 80 Masse% Melaminderivaten und/oder Triazinderivaten, gegebenenfalls unter Zusatz von 0,1 bis 10 Masse%, bezogen auf die Summe von Melamin, Melaminderivaten und Triazinderivaten, an Phenolen und/oder Harnstoff, und C₁-C₁₀-Aldehyden bzw. C₁-C₁₀-Aldehyd-Mischungen, wobei die C₁-C₁₀-Aldehyde bevorzugt Formaldehyd, Acetaldehyd, Trimethylolacetaldehyd, Acrolein, Benz-aldehyd, Furfural, Glyoxal, Glutaraldehyd, Phthalaldehyd und/oder Terephthalaldehyd, besonders bevorzugt Formaldehyd, sind.

Beispiele für die in den Melaminharzen in der Melaminkomponente gegebenenfalls enthaltenen Melaminderivate sind durch Hydroxy-C₂-C₁₀-alkylgruppen, Hydroxy-C₂-C₄-alkyl-(oxa-C₂-C₄-alkyl)₁₋₅-gruppen und/oder durch Amino-C₂-C₁₂-alkylgruppen substituierten Melamine wie 2-(2-Hydroxyethyl-amino)-4,6-diamino-1,3,5-triazin, 2-(5-Hydroxy-3-oxapentylamino)-4,6-diamino-1,3,5-triazin oder 2,4,6-Tris-(6-aminohexylamino)-1,3,5-triazin und/oder Ammelin.

Beispiele für die in den Melaminharzen in der Melaminkomponente gegebenenfalls enthaltenen Triazinderivate sind durch Hydroxy-C₂-C₁₀-alkylgruppen, Hydroxy-C₂-C₄-alkyl-(oxa-C₂-C₄-alkyl)₁₋₅-gruppen und/oder Amino-C₂-C₁₂-alkylgruppen substituierte Diaminomethyl-triazine und/oder Diaminophenyltriazine wie 2,4-(Di-5-hydroxy-3-oxapentylamin)-6-methyl-1,3,5-triazin.

Die Melaminharze in den syntaktischen Aminoplastschäumen können als Phenolkomponenten Phenol, C₁-C₉-Alkylphenole, Hydroxyphenole und/oder Bisphenole enthalten. Beispiele für die in den syntaktischen Aminoplastschäumen gegebenenfalls enthaltenen Epoxidharze sind Epoxidharze auf Basis von Epichlorhydrin und Bis-(Epoxyphenyl)-2,2-propan, Resorcin, 4,4'-Dihydroxydiphenylsulfon und/oder Tetrabromdiphenylpropan als Bisphenolkomponenten. Beispiele für die in den syntaktischen Aminoplastschäumen gegebenenfalls enthaltenen Phenolharze sind Phenolharze, die neben Phenol ebenfalls 4-tert.-Butylphenol, Resorcin, 2,2-Bis(4-hydroxyphenyl)propan und/oder 4,4'-Dihydroxydiphenylsulfon als Phenolkomponenten enthalten können. Beispiele für die in den syntaktischen Aminoplastschäumen gegebenenfalls enthaltenen Polyesterharze sind Polyesterharze aus ungesättigten Dicarbonsäuren und Dialkoholen, die beispielsweise bei der Herstellung der Halbzeuge oder Formstoffe durch ungesättigte polymerisierbare Zusätze wie Allylverbindungen aushärten.

Als Füllstoffe können in den syntaktischen Aminoplastschäumen Al₂O₃, Al(OH)₃, Bariumsulfat, Calciumcarbonat, Glaskugeln, Kieselerde, Mikrohohlkugeln, Russ, Talkum, Schichtsilikate wie Bentonite und/oder Wollastonit enthalten sein.

Geeignete Verstärkerstoffe, die in den syntaktischen Aminoplastschäumen enthalten sein können, sind Cellulosefasern, Flachs, Jute, Kenaf und/oder Glasfasern.

Beispiele für geeignete Flammschutzmittel, die gegebenenfalls in den syntaktischen Amino-plastschäumen enthalten sein können, sind Aluminiumphosphat, Ammoniumpolysulfat, Antimontrioxid, roter Phosphor, Magnesiumphosphat, Decabromdiphenylether, Trisdibrompro-pylisocyanurat, Tetrabrombisphenol-bisdibrompropylether und/oder Tris(trisbromneopen-tyl)phosphat.

Als Hydrophobierungsmittel können in den syntaktischen Aminoplastschäumen beispielsweise Polysiloxane, Paraffine und/oder Wachse enthalten sein. Als Verarbeitungshilfsmittel können in den syntaktischen Aminoplastschäumen Calciumstearat, Magnesiumstearat und/oder Wachse enthalten sein.

Die syntaktischen Aminoplastschäume hoher Flammfestigkeit und Hydrolyseresistenz mit einer Dichte von 5 bis 500 kg/m³ aus verklebten kugelförmigen Partikeln werden erfindungs-gemäss nach einem Verfahren hergestellt, bei dem
- in der ersten Verfahrensstufe zur Herstellung kugelförmiger Mikrohohlpartikel in einem Rührreaktor mit Turborührer Aminoplastprepolymere vom Typ Melaminharze, Harnstoff-harze, Cyanamidharze, Dicyandiamidharze, Sulfonamidharze und/oder Anilinharze mit einem Molmassenzahlenmittel von 150 bis 1000 als Lösung in Wasser und/oder in organischen Lösungsmitteln oder Lösungsmittelgemischen mit einem Harzanteil von 50 bis 98 Masse% bei 20 bis 80°C/100 bis 300 kPa in eine Emulgatorfreie wässrige Dispersion von flüchtigen Kohlenwasserstoffen, Fluorkohlenwasserstoffen und/oder Inert-gasen, die 0,1 bis 1,0 Masse%, bezogen auf die Aminoplastprepolymere, saure Kataly-satoren enthält, eingetragen und umgesetzt werden, wobei das Volumenverhältnis Wasser/flüchtige Kohlenwasserstoffe, Fluorkohlenwasserstoffe und/oder Inertgase 0,5 : 1 bis 3 : 1, der Aminoplastanteil in der Dispersion 10 bis 30 Masse%, und die Verweilzeit in der ersten Verfahrensstufe 10 bis 45 min beträgt,
- in der zweiten Verfahrensstufe zur Verklebung der kugelförmigen Mikrohohlpartikel die emulgatorfreie wässrige Dispersion aus den gebildeten Mikrohohlpartikeln mit einer Membran aus Aminoplast und flüchtigen Kohlenwasserstoffen, Fluorkohlenwasserstoffen und/oder Inertgasen im Hohlraum, gegebenenfalls unter Hinzufügen von 1 bis 20 Masse%, bezogen auf die in der ersten Verfahrensstufe eingesetzten Aminoplast-prepolymere, Prepolymeren auf Basis von Epoxidharzen, Phenolharzen, Harnstoff-harzen, Melaminharzen, Cyanamidharzen, Dicyandiamidharzen, Sulfonamidharzen, Anilinharzen, Resorcinharzen und/oder Polyesterharzen als Lösung, Emulsion oder Dispersion, und gegebenenfalls 0,05 bis 1 Masse%, bezogen auf die eingesetzten Aminoplastprepolymere, Verarbeitungshilfsmitteln, entweder in Formen ausgetragen, bei 20 bis 180°C und einer Verweilzeit von 0,5 bis 8 Std. ausgehärtet, getrocknet und entformt, oder durch ein Profilwerkzeug auf eine Bandabzugseinrichtung als Flächen-gebilde ausgetragen, und, gegebenenfalls unter Laminierung mit Trägermaterialien, in einem Trocknungstunnel unter Einwirkung thermischer und/oder Mikrowellenenergie bei 50 bis 120°C ausgehärtet und getrocknet werden,
wobei den Aminoplastprepolymeren vor Eindosierung in den Rührreaktor und/oder im Rührreaktor 1 bis 20 Masse% Füll- und/oder Verstärkerstoffe, 0,1 bis 3 Masse% Flammschutzmittel, 0,05 bis 30 Masse% Hydrophobierungsmittel und/oder 0,1 bis 1 Masse%, jeweils bezogen auf den Aminoplast, Pigmente zugesetzt werden können.

Das Molverhältnis Melaminkomponente zu Aldehydkomponente der gegebenenfalls in der ersten Verfahrensstufe eingesetzten Melaminharzprepolymeren beträgt bevorzugt 1 : 2 bis 1 : 6.

Bevorzugt werden in der ersten Verfahrensstufe als Melaminharzprepolymere entweder Prepolymere eingesetzt, bei denen 0,5 bis 50 mol% der Methylolgruppen im Prepolymer durch Umsetzung mit C₁- bis C₄-aliphatischen Alkoholen veräthert worden sind, oder Mischungen aus 5 bis 95 Masse% nichtmodifizierten Prepolymeren und 95 bis 5 Masse% der vorgenannten partiell verätherten Prepolymeren eingesetzt. Die in der ersten Verfahrensstufe eingesetzten Aminoplastprepolymere werden bevorzugt in einer der Dispersionsstufe unmittelbar vorgelagerten Polykondensationsstufe hergestellt.

Als organische Lösungsmittel, die für die Aminoplastprepolymere in der ersten Verfahrens-stufe bei der Dosierung in den Rührreaktor eingesetzt werden, sind insbesondere C₁-C₆-Alkohole wie Methanol oder Ethanol geeignet. Beispiele für flüchtige Kohlenwasserstoffe, die in der ersten Verfahrensstufe in der wässrigen Dispersion eingesetzt werden können, sind Butan, Pentan, Isopentan und/oder Hexan. Beispiele für flüchtige Fluorkohlenwasserstoffe sind Tetrafluorethan, Trichlorfluormethan, Trichlorfluorethan, Difluormethan, Dichlordifluormethan und/oder Fluorpropan. Bevorzugte Inertgase in der ersten Verfahrensstufe sind Kohlendioxid, Stickstoff und/oder Argon.

Für die Herstellung und Zerteilung der Inertgas-Wasser-Dispersionen in der ersten Verfahrensstufe werden bevorzugt Gaseintrags-Mehrphasenpumpen mit Kreislaufführung eingesetzt.

Saure Katalysatoren in der ersten Verfahrensstufe sind beispielsweise anorganische Säuren wie Salzsäure oder Schwefelsäure und/oder organische Säuren wie Ameisensäure, Essigsäure, Oxalsäure, p-Toluolsulfonsäure oder Milchsäure. Bevorzugt werden als saure Katalysatoren Säuren mit Pufferfunktion wie Citronensäure, Essigsäure und/oder Phosphorsäure oder saure Salze mit Pufferfunktion wie Natriumhydrogenphosphat oder Kaliumhydrogenphosphat.

Für die Herstellung von Laminaten kann die Laminierung der ausgetragenen syntaktischen Aminoplastschäume insbesondere mit Bahnen aus Papier, Pappe oder Textil, Metallfolien oder Metallband oder nichtgeschäumten bzw. geschäumten Kunststofffolien erfolgen. Besonders bevorzugt werden Laminate, die aus mehreren Bahnen aus syntaktischen Aminoplastschäumen bestehen. Als Bindemittel bei der Laminierung können Prepolymere auf Basis von Epoxidharzen, Phenolharzen, Harnstoffharzen, Melaminharzen, Cyanamidharzen, Dicyandiamidharzen, Sulfonamidharzen, Anilinharzen, Resorcinharzen und/oder Polyesterharzen als Lösung, Emulsion oder Dispersion eingesetzt werden.

Die syntaktischen Aminoplastschäume sind bevorzugt in Form von Halbzeugen aus syntaktischen Aminoplastschäumen, insbesondere in Form von Schaumfolien, Schaumprofilen oder Laminaten mit Bahnen aus Papier, Pappe oder Textil, Metallfolien, Metallband, nichtgeschäumten bzw. geschäumten Kunststofffolien, sowie von Formstoffen, insbesondere in Form von thermogeformten Bauteilen, für Isolationsteile im Bauwesen, in der Fahrzeugindustrie, im Maschinenbau und in der Geräteindustrie geeignet.

### Beispiel 1

Zur Herstellung des Aminoplastprepolymers werden in einem 50 l - Rührreaktor 30 kg 30% wässrige Formalinlösung und 12 kg Melamin eingetragen und bei 80°C unter Rühren innerhalb 30 min kondensiert. Zur Herstellung der kugelförmigen Mikrohohlpartikel wird die wässrige Melaminharzlösung innerhalb 3 min in einen zweiten 200 l - Rührreaktor mit Turborührer (40 m/s) überführt, in dem sich eine feinteilige gerührte Dispersion aus 75 l Wasser, 7,5 kg Citronensäure und 25 l Benzin (Siedegrenze 30 bis 70°C), die auf 25°C gehalten wird, befindet. Nach einer Reaktionszeit von 15 min wird die Dispersion der kugelförmigen Mikrohohlpartikel, die gelöste Anteile an Melaminharzprepolymer enthält, in eine Formwanne ausgetragen und zur Verklebung der Mikrohohlpartikel zur Platte aus syntaktischem Melaminharzschaum bei 150°C 2,5 Std. ausgehärtet und getrocknet. Die Ausbeute an syntaktischem Melaminharzschaum beträgt 18,5 kg, die Dichte 15,5 kg/m³ und der mittlere Hohlraumdurchmesser 140 µm. Ausgestanzte Prüfkörper besitzen eine Zug-festigkeit von 195 kPa.

### Beispiel 2

Zur Herstellung des Aminoplastprepolymers werden in einem 50 I -Rührreaktor 35 kg 30% wässrige Formalinlösung, 12 kg Melamin und 2,5 kg Harnstoff eingetragen und bei 75°C unter Rühren innerhalb 40 min kondensiert. Zur Herstellung der kugelförmigen Mikrohohlpartikel wird die wässrige Harzlösung innerhalb 4 min in einen zweiten 200 l - Rührreaktor mit Turborührer (40 m/s) überführt, in dem sich eine feinteilige gerührte Dispersion aus 85 l Wasser, 4,5 kg Natriumhydrogenphosphat und 35 l Trichlorfluorpropan, die auf 30°C gehalten wird, befindet. Nach einer Reaktionszeit von 20 min wird die Dispersion der kugelförmigen Mikrohohlpartikel, die gelöste Anteile an Aminoplastprepolymer enthält, aus dem zweiten Rührreaktor über eine Austragsschnecke durch ein Profilwerkzeug 800 x 40 mm unter Verklebung der Mikrohohlpartikel auf ein Metallband als Folie aus syntaktischem Aminoplastschaum ausgetragen und beim Durchlauf eines Trockentunnels durch IR-Strahler (Verweilzeit im Trockentunnel 8 min, Oberflächentemperatur der Folie aus syntaktischem Aminoplastschaum beim Ausgang 195°C) ausgehärtet und getrocknet. Die Dichte der Folie aus syntaktischem Aminoplastschaum beträgt 32 kg/m³ und der mittlere Hohlraumdurchmesser 220 µm. Ausgestanzte Prüfkörper besitzen eine Zugfestigkeit von 365 kPa.

## Patentansprüche

1. Verfahren zur Herstellung von syntaktischen Aminoplastschäumen hoher Flammfestigkeit und Hydrolyseresistenz mit einer Dichte von 5 bis 500 kg/m³ aus verklebten kugelförmigen Partikeln, **dadurch gekennzeichnet, dass**
- in der ersten Verfahrensstufe zur Herstellung kugelförmiger Mikrohohlpartikel in einem Rührreaktor mit Turborührer Aminoplastprepolymere vom Typ Melaminharze, Harnstoffharze, Cyanamidharze, Dicyandiamidharze, Sulfonamidharze und/oder Anilinharze mit einem Molmassenzahlenmittel von 150 bis 1000 als Lösung in Wasser und/oder in organischen Lösungsmitteln oder Lösungsmittelgemischen mit einem Harzanteil von 50 bis 98 Masse% bei 20 bis 80°C/100 bis 300 kPa in eine emulgatorfreie wässrige Dispersion von flüchtigen Kohlenwasserstoffen, Fluorkohlenwasserstoffen und/oder Inertgasen, die 0,1 bis 1,0 Masse%, bezogen auf die Aminoplastprepolymere, saure Katalysatoren enthält, eingetragen und umgesetzt werden, wobei das Volumenverhältnis Wasser/flüchtige Kohlenwasserstoffe, Fluorkohlenwasserstoffe und/oder Inertgase 0,5 : 1 bis 3 : 1, der Aminoplastanteil in der Dispersion 10 bis 30 Masse%, und die Verweilzeit in der ersten Verfahrensstufe 10 bis 45 min beträgt,
- in der zweiten Verfahrensstufe zur Verklebung der kugelförmigen Mikrohohlpartikel die emulgatorfreie wässrige Dispersion aus den gebildeten Mikrohohlpartikeln mit einer Membran aus Aminoplast und flüchtigen Kohlenwasserstoffen, Fluorkohlenwasserstoffen und/oder Inertgasen im Hohlraum, gegebenenfalls unter Hinzufügen von 1 bis 20 Masse%, bezogen auf die in der ersten Verfahrensstufe eingesetzten Aminoplastprepolymere, Prepolymeren auf Basis von Epoxidharzen, Phenolharzen, Hamstoffharzen, Melaminharzen, Cyanamidharzen, Dicyandiamidharzen, Sulfonamidharzen, Anilinharzen, Resorcinharzen und/oder Polyesterharzen als Lösung, Emulsion oder Dispersion, und gegebenenfalls 0,05 bis 1 Masse%, bezogen auf die eingesetzten Aminoplastprepolymere, Verarbeitungshilfsmitteln, entweder in Formen ausgetragen, bei 20 bis 180°C und einer Verweilzeit von 0,5 bis 8 Std. ausgehärtet, getrocknet und entformt, oder durch ein Profilwerkzeug auf eine Bandabzugseinrichtung als Flächengebilde ausgetragen, und, gegebenenfalls unter Laminierung mit Trägermaterialien, in einem Trocknungstunnel unter Einwirkung thermischer und/oder Mikrowellenenergie bei 50 bis 120°C ausgehärtet und getrocknet wird,
- wobei den Aminoplastprepolymeren vor Eindosierung in den Rührreaktor und/oder im Rührreaktor 1 bis 20 Masse% Füll- und/oder Verstärkerstoffe, 0,1 bis 3 Masse% Flammschutrmittel, 0,05 bis 30 Masse% Hydrophobierungsmittel und/oder 0,1 bis 1 Masse%, jeweils bezogen auf den Aminoplast, Pigmente zugesetzt werden können.

2. Verfahren nach Anspruch 1, **dadurch gekennzeichnet, dass** die kugelförmigen Mikrohohlpartikel einen Durchmesser von 10 bis 500 µm, bevorzugt 20 bis 80 µm, aufweisen.

3. Verfahren nach Anspruch 1, **dadurch gekennzeichnet, dass** die Melaminharze in der Membran der kugelförmigen Mikrohohlpartikel aus Polykondensaten von Melamin und C₁₋₁₀-Aldehyden bzw. C₁-C₁₀-Aldehyd-Mischungen und/oder Polykondensaten aus Mischungen von 20 bis 99,9 Masse% Melamin und 0,1 bis 80 Masse% Melaminderivaten und/oder Triazinderivaten, gegebenenfalls unter Zusatz von 0,1 bis 10 Masse%. bezogen auf die Summe von Melamin, Melaminderivaten und Triazinderivaten, an Phenolen und/oder Harnstoff, und C₁-C₁₀-Aldehyden bzw. C₁-C₁₀-Aldehyd-Mischungen bestehen, wobei die C₁-C₁₀-Aldehyde bevorzugt Formaldehyd, Acetaldehyd, Trimethylolacetaldehyd, Acrolein, Benzaldehyd, Furfurol, Glyoxal, Glutaraldehyd, Phthalaldehyd und/oder Terephthalaldehyd, besonders bevorzugt Formaldehyd, sind.

4. Verfahren zur Herstellung von syntaktischen Aminoplastschäumen nach Anspruch 1, **dadurch gekennzeichnet, dass** in den Melaminharzprepolymeren das Molverhältnis Melaminkomponente zu Aldehydkomponente 1 : 2 bis 1 : 6 beträgt.

5. Verfahren zur Herstellung von syntaktischen Aminoplastschäumen nach Anspruch 1, **dadurch gekennzeichnet, dass** als Melaminharzprepolymere entweder Prepolymere eingesetzt werden, bei denen 0,5 bis 50 mol% der Methylolgruppen im Prepolymer durch Umsetzung mit C₁- bis C₄-aliphatischen Alkoholen verethert worden sind, oder dass Mischungen aus 5 bis 95 Masse% nichtmodifizierten Melaminharzprepolymeren und 95 bis 5 Masse% der vorgenannten partiell veretherten Prepolymeren eingesetzt werden.

6. Verfahren zur Herstellung von syntaktischen Aminoplastschäumen nach Anspruch 1, **dadurch gekennzeichnet, dass** die Aminoplastprepolymere in einer der Dispersionsstufe unmittelbar vorgelagerten Polykondensationsstufe hergestellt werden.

7. Verfahren zur Herstellung von syntaktischen Aminoplastschäumen nach Anspruch 1, **dadurch gekennzeichnet, dass** im Rührreaktor bei der Herstellung und Zerteilung der Inertgas-Wasser-Dispersionen Gaseintrags-Mehrphasenpumpen mit Kreislaufführung eingesetzt werden.

8. Verfahren zur Herstellung von syntaktischen Aminoplastschäumen nach Anspruch 1, **dadurch gekennzeichnet, dass** als Trägermaterialien für die Laminierung der ausgetragenen Flächengebilde, die aus verklebten kugelförmigen Mikrohohlpartikeln mit einer Membran aus Aminoplasten bestehen, Bahnen aus Papier, Pappe oder Textil, Metallfolien, Metallband, nichtgeschäumte bzw. geschäumte Kunststofffolien, sowie insbesondere Flächengebilde aus verklebten kugelförmigen Mikrohohlpartikeln mit einer Membran aus Aminoplasten, eingesetzt werden.

## Claims

1. Process for the production of syntactic aminoplast foams having good flameproof properties and resistance to hydrolysis, having a density of from 5 to 500 kg/m³, comprising bonded spherical particles, **characterized in that**
- in the first process stage for the production of spherical hollow microparticles in a stirred reactor having a turbostirrer, aminoplast prepolymers of the melamine resin, urea resin, cyanamide resin, dicyandiamide resin, sulphonamide resin and/or aniline resin type having a number average molar mass of from 150 to 1000 are introduced as a solution in water and/or inorganic solvents or solvent mixtures having a resin content of from 50 to 98% by mass at from 20 to 80°C/100 to 300 kPa into an emulsifier-free aqueous dispersion of volatile hydrocarbons, fluorohydrocarbons and/or inert gases, which contains from 0.1 to 1.0% by mass, based on the aminoplast prepolymers, of acidic catalysts, and are reacted, the volume ratio of water/volatile hydrocarbons, fluorohydrocarbons and/or inert gases being from 0.5 : 1 to 3 : 1, the aminoplast content in the dispersion being from 10 to 30% by mass and the residence time in the first process stage being from 10 to 45 min,
- in the second process stage for bonding of the spherical hollow microparticles, the emulsifier-free aqueous dispersion of the resulting hollow microparticles with a membrane of aminoplast and volatile hydrocarbons, fluorohydrocarbons and/or inert gases in the cavity, optionally with addition of from 1 to 20% by mass, based on the aminoplast prepolymers used in the first process stage, of prepolymers based on epoxy resins, phenol resins, urea resins, melamine resins, cyanamide resins, dicyandiamide resins, sulphonamide resins, aniline resins, resorcinol resins and/or polyester resins, as a solution, emulsion or dispersion, and optionally from 0.05 to 1% by mass, based on the aminoplast prepolymers used, of processing auxiliaries, is either discharged into moulds, cured at from 20 to 180°C and in a residence time of from 0.5 to 8 hours, dried and demoulded, or discharged through a profile die onto a belt-type take-off means as a sheet-like structure and, optionally with lamination with carrier materials, cured and dried in a drying tunnel under the action of thermal and/or microwave energy at from 50 to 120°C,
- it being possible for from 1 to 20% by mass of fillers and/or reinforcing materials, from 0.1 to 3% by mass of flameproofing agents, from 0.05 to 30% by mass of water repellants and/or from 0.1 to 1% by mass, based in each case on the aminoplast, of pigments to be added to the aminoplast prepolymers before metering into the stirred reactor and/or in the stirred reactor.

2. Process according to Claim 1, **characterized in that** the spherical hollow microparticles have a diameter of from 10 to 500 µm, preferably from 20 to 80 µm.

3. Process according to Claim 1, **characterized in that** the melamine resins in the membrane of the spherical hollow microparticles consist of polycondensates of melamine and C₁-C₁₀-aldehydes or C₁-C₁₀-aldehyde mixtures and/or polycondensates of mixtures of from 20 to 99.9% by mass of melamine and from 0.1 to 80% by mass of melamine derivatives and/or triazine derivatives, optionally with addition of from 0.1 to 10% by mass, based on the sum of melamine, melamine derivatives and triazine derivatives, of phenols and/or urea, and C₁-C₁₀-aldehydes or C₁-C₁₀-aldehyde mixtures, the C₁-C₁₀-aldehydes preferably being formaldehyde, acetaldehyde, trimethylolacetaldehyde, acrolein, benzaldehyde, furfurol, glyoxal, glutaraldehyde, phthalaldehyde and/or terephthalaldehyde, particularly preferably formaldehyde.

4. Process for the production of syntactic aminoplast foams according to Claim 1, **characterized in that**, in the melamine resin prepolymers, the molar ratio of melamine component to aldehyde component is from 1 : 2 to 1 : 6.

5. Process for the production of syntactic aminoplast foams according to Claim 1, **characterized in that** either prepolymers in which from 0.5 to 50 mol% of the methylol groups in the prepolymer have been etherified by reaction with aliphatic C₁- to C₄- alcohols are used as melamine resin prepolymers, or **in that** mixtures of from 5 to 95% by mass of unmodified melamine resin prepolymers and from 95 to 5% by mass of the abovementioned partially etherified prepolymers are used.

6. Process for the production of syntactic aminoplast foams according to Claim 1, **characterized in that** the aminoplast prepolymers are prepared in a polycondensation stage directly upstream of the dispersion stage.

7. Process for the production of syntactic aminoplast foams according to Claim 1, **characterized in that** circulation-type multiphase gas feed pumps are used in the stirred reactor during the preparation and separation of the inert gas-water dispersions.

8. Process for the production of syntactic aminoplast foams according to Claim 1, **characterized in that** webs of paper, board and textile, metal foils, metal tape, unfoamed or foamed plastic sheets and in particular sheet-like structures comprising bonded spherical hollow microparticles having a membrane of aminoplasts are used as carrier materials for the lamination of the discharged sheet-like structures which consist of bonded spherical hollow microparticles having a membrane of aminoplasts.

## Revendications

1. Procédé pour la préparation de mousses d'aminoplaste syntactique présentant une résistance élevée aux flammes et à l'hydrolyse, présentant une densité de 5 à 500 kg/m³ à partir de particules sphériques collées, **caractérisé en ce que**
- dans la première étape de procédé, en vue de la préparation de microparticules creuses sphériques, dans un réacteur agité, équipé d'un turbo-agitateur, des prépolymères d'aminoplaste du type résines de mélamine, d'urée, de cyanamide, de dicyanodiamide, de sulfonamide et/ou d'aniline, présentant une moyenne numérique de masse molaire de 150 à 1000 sous forme d'une solution dans l'eau et/ou dans des solvants organiques ou des mélanges de solvants présentant une proportion de résine de 50 à 98% en masse, à 20 à 80°C/100 à 300 kPa, sont introduits et transformés dans une dispersion exempte d'émulsifiant, aqueuse, d'hydrocarbures volatils, d'hydrocarbures fluorés volatils et/ou des gaz inertes, qui contient 0,1 à 1,0% en masse, par rapport aux prépolymères d'aminoplaste, de catalyseurs acides, le rapport volumique eau/hydrocarbures volatils, hydrocarbures fluorés volatils et/ou gaz inertes étant de 0,5 : 1 à 3 : 1, la proportion d'aminoplaste dans la dispersion étant de 10 à 30% en masse et le temps de séjour dans la première étape de procédé étant de 10 à 45 min,
- dans la deuxième étape de procédé, en vue de coller les microparticules creuses sphériques, la dispersion exempte d'émulsifiant, aqueuse des microparticules creuses formées avec une membrane en aminoplaste et des hydrocarbures volatils, des hydrocarbures fluorés volatils et/ou des gaz inertes dans l'espace creux, le cas échéant avec addition de 1 à 20% en masse, par rapport aux prépolymères d'aminoplaste utilisés dans la première étape de procédé, de prépolymères à base de résines d'époxyde, de résines phénoliques, de résines d'urée, de mélamine, de cyanamide, de dicyanodiamide, de sulfonamide, d'aniline, de résorcinol et/ou de polyester sous forme d'une solution, émulsion ou dispersion, et le cas échéant, de 0,05 à 1% en masse, par rapport aux prépolymères d'aminoplaste utilisés, d'adjuvants de transformation, est déversée dans des moules, durcie à 20 jusqu'à 180°C pendant un temps de séjour de 0,5 à 8 h, séchée et démoulée ou déversée par un outil de profilage sur un dispositif d'évacuation de bande, sous forme d'une structure plane et, le cas échéant avec un laminage avec des matériaux support, durcie et séchée dans un tunnel de séchage sous l'effet d'une énergie thermique et/ou de micro-ondes, à 50 jusqu'à 120°C,
- les prépolymères d'aminoplaste pouvant être mélangés avant le dosage dans le réacteur agité et/ou dans le réacteur agité, avec 1 à 20% en masse de charges et/ou de substances de renforcement, 0,1 à 3% en masse d'agent retardateur de flamme, 0,05 à 30% en masse d'agent d'hydrofugation et/ou 0,1 à 1% en masse, à chaque fois par rapport à l'aminoplaste, de pigments.

2. Procédé selon la revendication 1, **caractérisé en ce que** les microparticules creuses sphériques présentent un diamètre de 10 à 500 µm, de préférence de 20 à 80 µm.

3. Procédé selon la revendication 1, **caractérisé en ce que** les résines de mélamine dans la membrane des microparticules creuses sphériques sont constituées par des produits de polycondensation de mélamine et d'aldéhydes en C₁ à C₁₀ ou de mélanges d'aldéhydes en C₁ à C₁₀ et/ou des produits de polycondensation de mélanges constitués par 20 à 99,9% en masse de mélamine et 0,1 à 80% en masse de dérivés de mélamine et/ou de triazine, le cas échéant avec addition de 0,1 à 10% en masse, par rapport à la somme de mélamine, de dérivés de mélamine et de dérivés de triazine, de phénols et/ou d'urée, et d'aldéhydes en C₁ à C₁₀ ou de mélanges d'aldéhydes en C₁ à C₁₀, les aldéhydes en C₁ à C₁₀ étant de préférence le formaldéhyde, l'acétaldéhyde, le triméthylolacétaldéhyde, l'acroléine, le benzaldéhyde, le furfurol, le glyoxal, le glutaraldéhyde, le phtalaldéhyde et/ou le téréphtalaldéhyde, de manière particulièrement préférée le formaldéhyde.

4. Procédé pour la préparation de mousses d'aminoplaste syntactique selon la revendication 1, **caractérisé en ce que** dans les prépolymères de résine de mélamine, le rapport molaire de composant mélamine à aldéhyde est de 1 : 2 à 1 : 6.

5. Procédé pour la préparation de mousses d'aminoplaste syntactique selon la revendication 1, **caractérisé en ce qu'**on utilise, comme prépolymères de résine de mélamine, des prépolymères dans lesquels 0,5 à 50% en mole des groupes méthylol dans le polymère sont éthérifiés par transformation avec des alcools aliphatiques en C₁ à C₄, ou **en ce qu'**on utilise des mélanges constitués par 5 à 95% en masse de prépolymères de résine de mélamine non modifiés et 95 à 5% en masse des prépolymères partiellement éthérifiés susmentionnés.

6. Procédé pour la préparation de mousses d'aminoplaste syntactique selon la revendication 1, **caractérisé en ce que** les prépolymères d'aminoplaste sont préparés dans une étape de polycondensation immédiatement préalable à l'étape de dispersion.

7. Procédé pour la préparation de mousses d'aminoplaste syntactique selon la revendication 1, **caractérisé en ce qu'**on utilise, dans le réacteur agité, lors de la préparation et de la répartition des dispersions gaz inerte-eau des pompes à plusieurs phases d'introduction de gaz avec un guidage en circuit.

8. Procédé pour la préparation de mousses d'aminoplaste syntactique selon la revendication 1, **caractérisé en ce qu'**on utilise comme matériaux support pour le laminage des structures planes déversées, qui sont constituées par des microparticules creuses, sphériques, collées avec une membrane en aminoplastes, des bandes en papier, en carton ou en textile, des feuilles métalliques, une bande métallique, des feuilles en matériaux synthétiques non moussés ou moussés ainsi qu'en particulier des structures planes en microparticules creuses, sphériques, collées avec une membrane en aminoplastes.
